# EUROPÄISCHE PATENTANMELDUNG

(11) **EP 0 801 470 A1**
(43) Veröffentlichungstag der Anmeldung: **15.10.1997**
(21) Anmeldenummer: 96105568.8
(22) Anmeldetag: 09.04.1996
(51) Int. Cl.: H04B 1/08

(54) **Bedienteilsicherungsbügel**

(71) Anmelder: Gerner, Ralf, 94469 Deggendorf (DE)
(72) Erfinder: Gerner, Ralf, 94469 Deggendorf (DE)

(57) **Zusammenfassung**

Ein Bedienteilsicherungsbügel (1) besteht aus Metal dessen Stärke ein Millimeter beträgt und laut Skizze (Abb. 1) so geformt ist, daß dieser so zwischen Autoradio und der dafür vorgesehenen Öffnung in der Vorführwand angebracht werden kann, daß das abnehmbare Bedienteil (1) des Autoradios nicht entwendet werden kann.

## Beschreibung

Die Erfindung bezieht sich auf eine mechanische Sicherung, die es verhindert, daß abnehmbare Bedienteile, wie sie sich auf Autoradios befinden, die im gewerblichen Einzelhandel zur Demonstration in Vorführwände eingebaut sind, vom Endverbrauer entwendet werden können.

Gegenstand der Erfindung ist ein Bedienteilsicherungsbügel aus Metal mit einer bestimmten Form, der zwischen Autoradio und die Einbauöffnung der Vorführwand gesteckt wird.

Der Zweck der Erfindung ist der, daß abnehmbare Bedienteile bei Autoradios gegen Diebstahl gesichert werden.

Erfindungsgemäß wird dies durch einen Bedienteilsicherungsbügel, der zwischen Autoradio und Einbauöffnung, in die das Autoradio eingebaut wird, angebracht wird erreicht.

Der Vorteil dieses Bedienteilsicherungsbügels liegt darin, daß dieser weder festgeschraubt, angenagelt oder geklebt werden muß und somit immer wieder uneingeschränkt verwendet werden kann.
Außerdem ist er bei jedem Autoradio, egal welcher Typ oder Hersteller einsetzbar.

Im folgenden wird die Erfindung anhand einer Skizze und mit Bezug auf die beiliegende Zeichnung näher erläutert, wobei
Abbildung 1 den Bedienteilsicherungsbügel und
Abbildung 2 die Anbringung zwischen Autoradio und Einbauöffnung der Vorführwand zeigt.

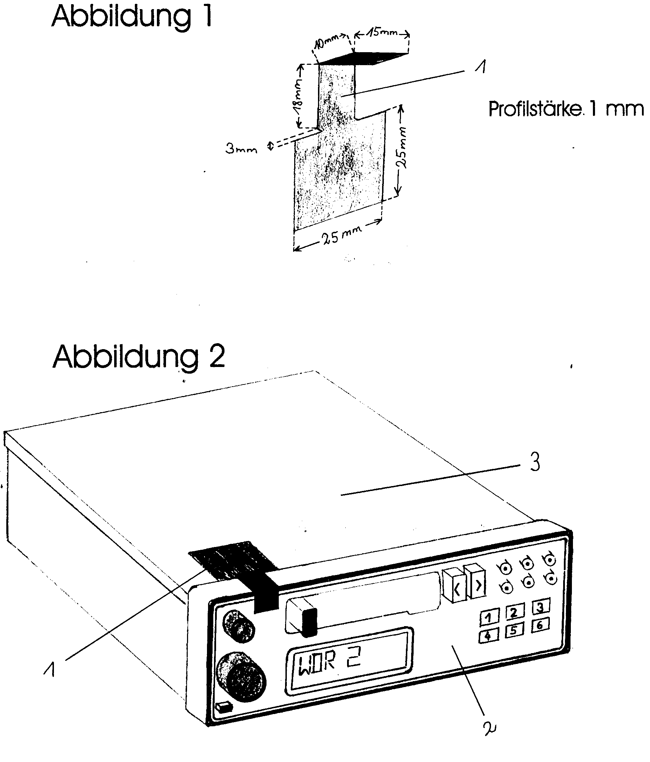

In Abbildung 1 sind die Form und die exakten Maße des Bedienteilsicherungsbügels dargestellt.
Abbildung 2 zeigt den Metalbügel (1), dessen Stärke ein Millimeter beträgt und so geformt ist, daß die 25 Millimeter breite Seite aufden Autoradiodeckel (3), Autoradioboden oder den Autoradioseitenteil liegt, die 18 Millimeter lange Seite über den Autoradiorand hervorragt und die 15 Millimeter lange Seite über das Bedienteil (2) des Autoradios ragt.

## Patentansprüche

1. Bedienteilsicherungsbügel (1), Form und Maße laut Skizze, zur Sicherung von abnehmbaren Bedienteilen bei Autoradios, der so geformt ist, daß dieser ohne zu schrauben, nageln oder kleben zwischen Autoradio und Vorführwand angebracht werden kann.
